# EUROPEAN PATENT SPECIFICATION

(11) **EP 0 808 572 B1**
(45) Date of publication and mention of the grant of the patent: **31.10.2001**
(21) Application number: 97303488.7
(22) Date of filing: 22.05.1997
(51) Int. Cl.: A21C 3/02

(54) **Method and apparatus for feeding bread dough**
Verfahren und Vorrichtung zur Zufuhr von Brotteig
Procédé et appareil d'alimentation de pâte à pain

(30) Priority: 22.05.1996 JP 14979296
(43) Date of publication of application: 26.11.1997
(73) Proprietor: RHEON AUTOMATIC MACHINERY CO. LTD., Utsunomiya-shi Tochigi-ken (JP)
(72) Inventor: Hayashi, Torahiko, Utsunomiya-shi, Tochigi-ken (JP)
(74) Representative: Leale, Robin George

(56) References cited:
- EP-A- 0 140 458
- EP-A- 0 251 138
- EP-A- 0 311 240
- DE-A- 4 424 461

## Description

The present invention relates to a method and apparatus for bread production, more particularly a method and apparatus for stably forming a continuous and uniform belt-like strip of a predetermined thickness from a gel-like elastic material such as bread dough, supplied from a hopper, by having such dough effectively and constantly flow downward from an outlet provided at the bottom of the hopper.

In a conventional method of producing bread in large amounts, a certain amount of bread dough in a hopper is sucked by a piston into a cylinder provided at the bottom of the hopper, and then a certain amount of the bread dough is cut and extruded, and this cutting and extruding step is repeated. However, this method involves many complicated steps. Also, repeated shearing stress applied to the bread dough by this method decreases its elasticity. Therefore, a chemical additive such as potassium bromate has been added to restore the original gluten tissue and to recover the membrane function required for producing bread.

Two relevant prior art proposals have been disclosed, in Japanese Patent Publications Nos. 5-3253 and 6-37 respectively. By these proposals dough is pressed by rotating opposed rollers, to continuously produce a dough strip. However, these proposals make it necessary to provide means by which the pressure on the bread dough caused by pairs of opposed rollers aligned one above the other is prevented from rising unduly, by detecting with a sensor the amount of dough supplied from an upper pair of pressing rollers to a lower pair of pressing rollers, and then adjusting the rotating speed of the upper pressing rollers.

European Patent Application No. 96303654.6 filed on May 22 1996 by the present applicant discloses a method and apparatus for continuously and uniformly supplying dough. In that method and apparatus, at least one horizontally positioned pair of dough feeding means that are rotatable in opposite directions is provided, the distance between the pair of feeding means being repeatedly increased and decreased in operation so as to prevent the increase of stress in the dough located between the pair of feeding means, and so that the dough can be constantly discharged from the gap between the pair of feeding means.

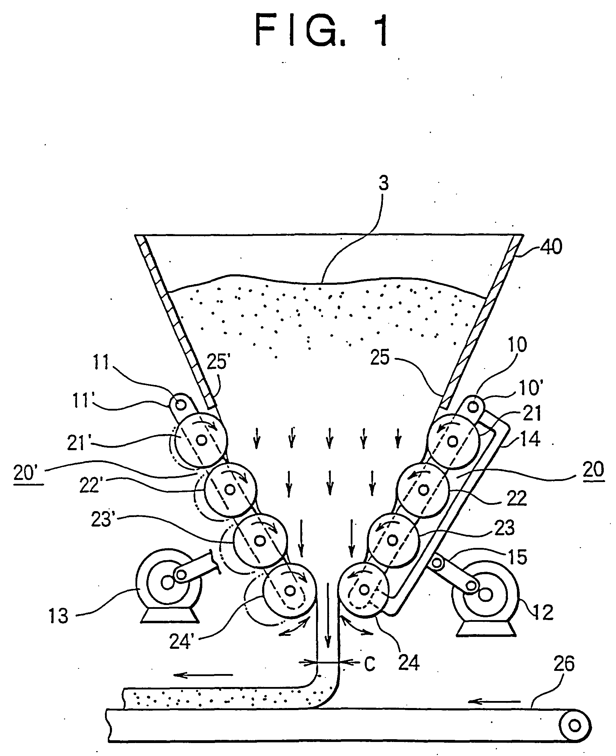

As shown in Fig. 1 of the accompanying drawings, in one embodiment of our said prior application, the apparatus includes the opposed pairs of feeding means, namely groups of rolls 20 and 20'. These comprise rolls 21, 22, 23, and 24, and rolls 21', 22', 23', and 24', respectively. The groups 20 and 20' are oppositely positioned, namely the rolls 21 to 24 are opposite the rolls 21' to 24' respectively, to provide four pairs of opposed rolls. These rolls are rotated in opposite directions to pull the dough 3 downward, while a swingable arm 10' on which the rolls 21 to 24 are mounted is swung about supporting point 10, and an arm 11' on which the rolls 21' to 24' are mounted is swung about supporting point 11, by energizing motors 12 and 13. Thus the pairs of rolls are repeatedly and reciprocally moved relative to each other and the distances between the pairs of rolls are thereby repeatedly increased and decreased, so that the pressure on the dough 3 located between the roll groups 20 and 20' can be prevented from increasing and the dough flows downward from the gap C.

However, in this apparatus the contact areas of the rotating rolls 21 to 24 and 21' to 24' of the groups 20 and 20' with the surface of the dough 3 are relatively small. Consequently, the amount of friction between each roll and the bread dough is relatively low, as compared with that of the belt of a belt conveyor. Therefore, the effectiveness of the apparatus in pulling the dough downward by the frictional engagement of the rolls with the surface of dough is low, leading to a low effectiveness in producing large amounts of bread dough.

DE-A-4424461 discloses a method and apparatus for continuously and quantitatively feeding bread dough or the like, by way of pressing means which comprises successive pairs of rollers oppositely positioned in a horizontal direction below a bread dough container, the rollers being continuously driven to feed the dough downwardly between them. One roller of each pair is movable in the horizontal direction to adjust the size of the gap between the rollers, but there is no suggestion of any continuous or reciprocal relative horizontal movement between the rollers.

EP-A-0251138 discloses a method and apparatus for quantitatively feeding bread dough or the like, by way of pressing means which comprises two belt conveyors oppositely positioned in a vertical direction, one of the conveyors being continuously and reciprocally moved to increase and decrease the distance therebetween and thereby compress the dough as it passes between them. However, the conveyors are not continuously driven, their conveying movement being interrupted whenever the dough is being compressed between them.

Viewed from one aspect the present invention provides a method of continuously and quantitatively feeding bread dough or the like, by way of pressing means which comprises two movable means, one of which is at least one roller or one belt conveyor and the other of which is at least one belt conveyor, which two movable means are oppositely positioned in a horizontal direction, below a bread dough container, the method comprising putting bread dough into said bread dough container, and actuating one or both of said two movable means to continuously and reciprocally move in a generally horizontal direction to increase and decrease the distance between said two movable mean while the or each said roller and/or belt conveyor thereof are continuously driven, thereby preventing the pressure on said bread dough positioned between said two movable means from being unduly increased, so as to allow said bread dough to stably flow downward therebetween.

Viewed from another aspect the invention provides apparatus for continuously and quantitatively feeding bread dough or the like, comprising pressing means provided below a bread dough container, which pressing means comprises two movable means, one of which is at least one roller or one belt conveyor the other of which is at least one belt conveyor, said roller being arranged to rotate about its own axis to apply a force to pull bread dough downward and said belt conveyor being arranged such that its conveying surface moves downward to apply a force to pull the bread dough downward, and which two movable means are oppositely positioned in a generally horizontal direction, one or both of said two movable means being arranged to move continuously and reciprocally in a generally horizontal direction to increase and decrease the distance between said two movable means while the or each said roller and/or belt conveyor thereof are continuously driven, whereby to prevent the pressure on bread dough positioned between said two movable means from being unduly increased so as to allow said bread dough to flow stably downward therebetween.

Some embodiments of the invention will now be described by way of example and with reference to the accompanying drawings, in which:-
Fig. 1 is a sectional view of the apparatus of an embodiment of our said prior application;
Fig. 2 is a sectional view of the apparatus of a first embodiment of this invention;
Fig. 3 is a sectional view of the apparatus of a second embodiment of this invention; and
Fig. 4 is a sectional view of the apparatus of a third embodiment.

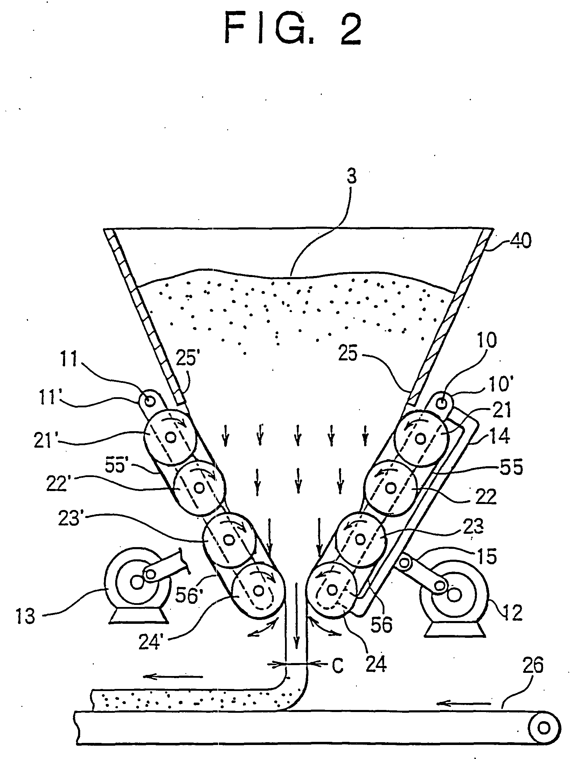

A first embodiment of this invention will be described with reference to Fig. 2.

Just below the bottom opening of a bread dough feeder, namely a hopper 40, the pressing means of this embodiment is disposed. It comprises two movable means. One of the two movable means comprises two belt conveyors 55 and 56. The belt conveyor 55 comprises rollers 21 and 22 with an endless belt entrained over them. The shafts of the rollers 21 and 22 are received in bearings (not shown) mounted on a swingable arm 10'. The rollers 21 and 22 are driven to rotate by respective drive means (not shown) at the same peripheral speed in directions indicated by arrows in Fig. 2, so that the conveying surface of the endless belt entrained over the rollers 21 and 22 is moved to pull the bread dough 3 downward.

Below the belt conveyor 55, the belt conveyor 56 is serially disposed. The belt conveyor 56 comprises rollers 23 and 24 with an endless belt entrained over them. The shafts of the rollers 23 and 24 are received in bearings (not shown) mounted on the swingable arm 10'. The rollers 23 and 24 are also driven to rotate by respective drive means (not shown) in directions indicated by arrows shown in Fig. 2, at a peripheral speed higher than that of the rollers 21 and 22. Consequently, the conveying surface of the belt entrained over the rollers 23 and 24 is moved downward to pull the bread dough 3 downward at a conveying speed higher than that of the conveying surface of the belt conveyor 55.

The swingable arm 10' is mounted on a bracket 14. The bracket 14 has a pin about which a crank arm 15 can swing. The other end of the crank arm 15 is connected to a pin mounted on a rotary disk of a motor 12.

Thus, when the motor 12 is energized, the crank arm 15 swings about the pin of the rotary disk so that the bracket 14 swings about a supporting point 10. Thus the bracket 14 and the conveying surfaces of the belt conveyors 55 and 56 are reciprocally moved in a generally horizontal direction while the said conveying surfaces pull the bread dough 3 downward.

The other two movable means of the pressing means comprises two belt conveyors 55' and 56'. The belt conveyor 55' comprises rollers 21' and 22' with an endless belt entrained over them. The shafts of the rollers 21' and 22' are received in bearings (not shown) mounted on a swingable arm 11'.

The rollers 21' and 22' are drive to rotate by respective drive means (not shown) at the same peripheral speed, so that the conveying surface of the endless belt entrained over the rollers 21' and 22' is moved downward to pull the bread dough 3 downward.

Below the belt conveyor 55' the belt conveyor 56' is serially disposed. The shafts of the rollers 23' and 24' are received in bearings (not shown) mounted on the swingable arm 11'. The rollers 23' and 24' are also driven to rotate by respective drive means (not shown) in directions indicated by arrows in Fig. 2, at a peripheral speed higher than that of the rollers 21' and 22'. Consequently the conveying surface of a belt entrained over the rollers 23'and 24' is moved to pull the bread dough 3 downward at a conveying speed higher than that of the belt conveyor 55'.

The conveying speed of the belt conveyor 55 can be controlled to be the same as that of the belt conveyor 55'. Similarly, the conveying speed of the belt conveyor 56 can be controlled to be the same as that of the belt conveyor 56'.

A bracket mounting the swingable arm 11' and a crank arm to be swingably connected to the bracket are not shown in Fig. 2. However, the structure of the means for swinging the belt conveyors 55' and 56' is the same as for the belt conveyors 55 and 56, so that when a motor supporting point 11. Therefore, the conveying surfaces of the belt conveyors 55' and 56' are reciprocally moved in a generally horizontal direction while the conveying surfaces of the belt conveyors 55' and 56' pull the bread dough 3 downward.

As shown in Fig. 2, the pressing means of this embodiment forms a V-shape. The lowermost part of the pressing means defines a gap C. Below the pressing means a belt conveyor 26 is disposed to receive and convey bread dough 3 flowing downward from the gap C. The distance between the conveying surface of the belt conveyor 55 and the conveying surface of the belt conveyor 55' is greater than the distance between the conveying surface of the belt conveyor 56 and the conveying surface of the belt conveyor 56'. Namely, the distance between the opposed conveying surfaces of an upper pair of belt conveyors is greater than that between the opposed conveying surfaces of a lower pair of belt conveyors.

Therefore, when three or more pairs of belt conveyors are provided in tiers, the distance between the opposed conveying surfaces of a lower pair is always less than that between the opposed conveying surfaces of an upper pair.

The range and speed of the swing can be controlled by synchronously controlling the speeds of the motors 12 and 13.

When the pressing means is actuated by energizing the motors 12 and 13, the swingable arms 10' and 11' swing about the supporting points 10 and 11, respectively. Therefore, as the conveying surfaces of the belt conveyors 55 and 56 move downward they simultaneously move reciprocally in a generally horizontal direction, to approach and retreat from the conveying surfaces of the belt conveyors 55' and 56' respectively. Further, the swinging movements of the swingable arms 10' and 11' are controlled to be synchronized so that the conveying surfaces of the belt conveyors 55 and 56 and the opposed conveying surfaces of the belt conveyors 55' and 56' simultaneously approach each other and retreat from each other, thereby repeatedly pressing, and releasing the pressure from, the bread dough 3 positioned between them.

Thus, the bread dough 3 located in the pressing means is subject to the repeated pressing and releasing action of the pressing means, whereby the pressure on the bread dough is prevented from unduly increasing, so that it is softened in the pressing means, and thereby flows downward from the gap C.

The discharge speed of bread dough from the pressing means generally equals the peripheral speed of the lowermost belt conveyors.

Either of the two movable means of the pressing means of this embodiment can be reciprocally moved in a generally horizontal direction by means of the swingable arm 10' or 11', which swings about the supporting point 10 or 11 respectively. However, these movable means may be reciprocally moved by means of any other suitable devices, so that they move linearly in the horizontal direction.

Either of the two movable means of the pressing means of this embodiment can be reciprocally moved to increase and decrease the distance between the two movable means. For instance, only the belt conveyors 55 and 56 may be reciprocally moved, while their conveying surfaces are moved downward, and the belt conveyors 55' and 56' are not reciprocally moved, while their conveying surfaces are moved downward.

Alternatively, swingable arms, brackets, crank arms and motors can be provided for each of the belt conveyors 55,56,55' and 56', respectively, so that these belt conveyors can be independently actuated in their respective conveying and reciprocating movements.

The reciprocal movements of the pair of upper belt conveyors 55 and 55' can be carried out alternately with the reciprocal movements of the pair of lower belt conveyors 56 and 56'. Thus, for example, the reciprocal movements of the belt conveyors 55 and 55' may be stopped for one or two seconds while the reciprocal movements of the belt conveyors 56 and 56' continue. Then the reciprocal movements of the belt conveyors 55 and 55' may continue while the reciprocal movements of the belt conveyors 56 and 56' are stopped for one or two seconds. These movements are repeatedly carried out, so that the bread dough 3 is alternately pressed and not pressed. Further, when three or more pairs of belt conveyors are tiered, the reciprocal movements of a pair of upper belt conveyors can be transmitted to the reciprocal movements of a pair of lower belt conveyors.

In any event, the bread dough 3 from the hopper 40 easily enters the gap C between the two movable means. Therefore, a problem of in the prior methods whereby bread dough positioned between opposed rollers or bread dough remaining in the hopper did not move downward, due to a bridge phenomenon, is resolved, so that bread dough is readily fed downward. Further, the conveying surface of a belt conveyor is relatively wide and its frictional force against bread dough is usually higher than that of the surface of a roller. Therefore, the bread dough 3 is more effectively pulled downward by the conveying surfaces of the belt conveyors 55, 56, 55' and 56', as compared with the apparatus of our prior application.

As explained above, in this embodiment the two movable means are arranged to form a V-shape. However, the shape formed by the two movable means is not limited to a V-shape. Also, the rate of reduction of the distance between opposed belt conveyors, i.e. the angle of the V-shape, and the conveying speeds of respective belt conveyors, can be optionally selected.

In this embodiment the supporting points 10 and 11 are positioned at the upper ends of the swingable arms. However, if a quantitative supply of bread dough is effected, the position of a supporting point can be optionally selected. Therefore, the position of a supporting point is not limited to the positions of this embodiment.

In this embodiment the two belt conveyors 55 and 56 comprise one of the two movable means. Alternatively, however, a single belt conveyor may be used. In this case a single belt conveyor may also be used for the other movable means. Namely, a single pair of belt conveyors may be disposed below the hopper 40. Swingable arms, brackets, crank arms, and motors are provided for the respective belt conveyors. When the motors are energized the two conveying surfaces of the belt conveyors alternately press, and reduce the pressure on, the bread dough 3 and pull the softened bread dough 3 downward.

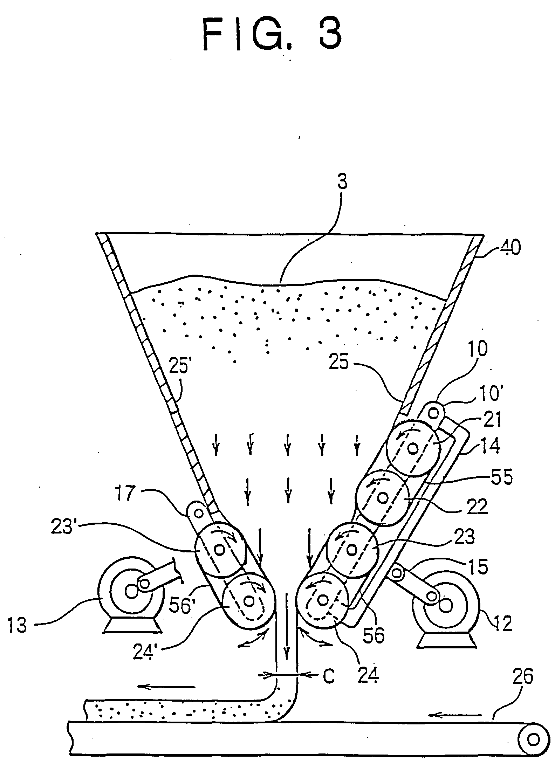

A second embodiment of this invention will be with reference to Fig. 3.

This embodiment is almost the same as that of the first embodiment except that one of the movable means is composed of only one belt conveyor, namely the belt conveyor 56'. A bracket for mounting swingable arm 17, and a part of a crank arm to be connected to the bracket, are not shown in Fig. 3. The conveying and reciprocating movements of the belt conveyor 56' are similar to those of the first embodiment.

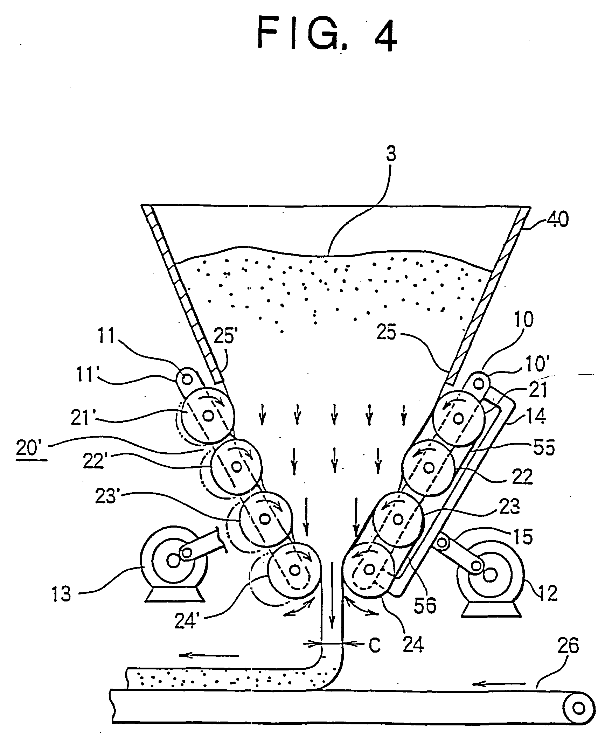

A third embodiment of this invention will be described with reference to Fig. 4.

In this embodiment, just below the bottom opening of a hopper 40, the pressing means is disposed. It comprises two movable means. One of the two movable means comprises two belt conveyors 55 and 56. These and related means and their functions are the same as those of the pressing means of the first embodiment.

The other of the two movable means comprises a roller group 20' comprising rollers 21', 22', 23', and 24'.

The shafts of these rollers are received in respective bearings (not shown) mounted on a swingable arm 11', and these rollers can be rotated about their axes by means of respective drive means (not shown).

The peripheral speeds of the rollers 21' and 22' are the same as the conveying speeds of the belt conveyor 55, and the peripheral speeds of the rollers 23' and 24' are the same as the conveying speed of the belt conveyor 56. Further, the peripheral speeds of the rollers 23' and 24' are higher than those of the rollers 21' and 22'.

Alternatively, the peripheral speed of each lower roller can be adapted to be higher than that of the next upper roller, since these rollers 21', 22', 23', and 24' are separately energized by means of respective drive means. Each of these drive means is controlled by a control unit (not shown) so that the peripheral speed of a lower roller is higher than that of an upper roller. Namely, the peripheral speed of the roller 24' is higher than that of the roller 22'. Similarly, the peripheral speed of the roller 23' is higher than that of the roller 22'. In this case, the conveying speed of the belt conveyor 56 needs to be about the same as the peripheral speed of the roller 24', and to be faster than the conveying speed of the belt conveyor 55. Further, the conveying speed of the belt conveyor 55 needs to be about the same as the peripheral speed of the roller 22'.

Alternatively, a belt conveyor (not shown) can be disposed between the rollers 21' and 24' in place of the rollers 22' and 23'.

A bracket for mounting the swingable arm 11' and a part of a crank arm to be swingably connected to the arm are not shown in Fig. 4. However, when the motor 13 is energized, the swingable arm 11' can swing about a supporting point 11. Consequently, the rollers are reciprocally moved in a generally horizontal direction while they pull the bread dough 3 downward.

As shown in Fig. 4, the lowermost part of the pressing means provides a gap C. Below the pressing means a belt conveyor 26 is disposed to receive and convey bread dough 3 flowing downward from the gap C.

When the pressing means is actuated by energizing the motors 12 and 13, the swingable arms 10' and 11' swing about the supporting points 10 and 11, respectively. Therefore, as the conveying surfaces of the belt conveyors 55 and 56 move downward, they simultaneously move reciprocally in a generally horizontal direction to approach and retreat from the rollers 21' to 24'. Further, the swinging movements of the swingable arms 10' and 11' are controlled to be synchronized so that the conveying surfaces of the belt conveyors 55 and 56 and the opposed rollers 21' to 24' are moved so as to simultaneously approach each other and to simultaneously retreat from each other, thereby repeatedly pressing and lessening the pressure on the bread dough 3 positioned therebetween.

Thus, the bread dough 3 located in the pressing means is subject to the repeated pressing and releasing action of the pressing means, whereby the pressure on the bread dough is prevented from unduly increasing, so that it is softened and thereby flows downward from the gap C.

The discharge speed of the bread dough from the pressing means generally equals the peripheral speed of the lowermost belt conveyor and the lowest roller.

The reciprocal movements of the rollers 21' and 22' can be adapted to be carried out alternately with the reciprocal movements of the rollers 23' and 24' and in synchronization with the reciprocal movements of the belt conveyors 55 and 56. Further, the reciprocal movement of an upper roller can be relayed to the reciprocal movement of a lower roller in synchronization with the relaying of the reciprocal movement of the belt conveyor 55 to the belt conveyor 56.

In any event, the bread dough 3 from the hopper 40 easily enters the space C between the two movable means. Therefore, a problem of prior methods whereby bread dough positioned between opposed rollers or bread dough remaining in the hopper did not fall or move downward, due to a bridge phenomenon, is resolved, so that the bread dough is readily fed downward.

In this embodiment one of the two movable means comprises four rollers. The frictional force of the surfaces of the rollers is relatively less as compared with the surfaces of the conveyor belts. Therefore, in this embodiment the force to pull bread dough downward is somewhat less than the force in the first embodiment.

However, the bread dough 3 is more effectively pulled downward by the conveying surfaces of the belt conveyors 55 and 56 and the surfaces of the rollers 21' to 24', as compared with the apparatus of our prior application.

## Claims

1. A method of continuously and quantitatively feeding bread dough (3) or the like, by way of pressing means which comprises two movable means, one of which is at least one roller (21'-24') or one belt conveyor (55', 56') and the other of which is at least one belt conveyor (55,56), which two movable means are oppositely positioned in a horizontal direction, below a bread dough container (40), the method comprising putting bread dough into said bread dough container, and actuating one or both of said two movable means to continuously and reciprocally move in a generally horizontal direction to increase and decrease the distance between said two movable mean while the or each said roller and/or belt conveyor thereof are continuously driven, thereby preventing the pressure on said bread dough positioned between said two movable means from being unduly increased, so as to allow said bread dough to stably flow downward therebetween.

2. Apparatus for continuously and quantitatively feeding bread dough (3) or the like, comprising pressing means provided below a bread dough container (40), which pressing means comprises two movable means, one of which is at least one roller (21'-24') or one belt conveyor (55',56') and the other of which is at least one belt conveyor (55,56), said roller being arranged to rotate about its own axis to apply a force to pull bread dough downward and said belt conveyor being arranged such that its conveying surface moves downward to apply a force to pull the bread dough downward, and which two movable means are oppositely positioned in a generally horizontal direction, one or both of said two movable means being arranged to move continuously and reciprocally in a generally horizontal direction to increase and decrease the distance between said two movable means while the or each said roller and/or belt conveyor thereof are continuously driven, whereby to prevent the pressure on bread dough positioned between said two movable means from being unduly increased so as to allow said bread dough to flow stably downward therebetween.

3. Apparatus as claimed in claim 2, wherein one of said two movable means comprises a plurality of tiered rollers (21'-24') or a plurality of lengthwise tiered belt conveyors' (55',56') and the other comprises a plurality of lengthwise tiered belt conveyors (55,56).

4. Apparatus as claimed in claim 2 or 3, wherein the peripheral speed of each said roller or each of said tiered rollers (21'-24') of said one of said two movable means is about the same as the conveying speed of each said belt conveyor or each of said tiered belt conveyors (55,56) of the other of said two movable means.

5. Apparatus as claimed in claim 3 or 4, wherein the peripheral speed of a lower roller (24') of said tiered rollers is higher than that of an upper roller (21') thereof and the conveying speed of a lower belt conveyor (56) of said tiered belt conveyors is higher than that of an upper belt conveyor (55) thereof.

6. Apparatus as claimed in any of claims 3 to 5, wherein the reciprocal movements of an upper roller or an upper belt conveyor and an opposed upper belt conveyor to increase and decrease the distance therebetween are carried out alternately with the reciprocal movements of a lower roller or a lower belt conveyor and an opposed lower belt conveyor to increase and decrease the distance therebetween.

7. Apparatus as claimed in any of claims 3 to 5, wherein the reciprocal movements of an upper roller or an upper belt conveyor and an opposed upper belt conveyor are in turn relayed to the reciprocal movements of a lower roller or a lower belt conveyor and an opposed lower belt conveyor.

8. Apparatus as claimed in any of claims 2 to 7, wherein the distance between said two movable means is such that the distance at the lowermost position is less than that at the uppermost position.

9. Apparatus as claimed in any of claims 2 to 8, wherein the reciprocal movements of said roller or rollers and said belt conveyor or belt conveyors are carried out by causing swingable arms (10',11) on which said roller or rollers or said belt conveyor or belt conveyors are rotatably or movably mounted to swing about respective supporting points (10,11) provided on the respective locations of the apparatus.

## Patentansprüche

1. Verfahren zum kontinuierlichen und mengenmäßigen Zuführen von Brotteig (3) oder dergleichen mittels einer Drückvorrichtung, die aus zwei beweglichen Einrichtungen besteht, deren eine zumindest ein Walzen- (21'- 24') oder ein Gurtförderer (55', 56') und deren andere zumindest ein Gurtförderer (55, 56) ist, welche beiden beweglichen Einrichtungen einander gegenüberliegend in Horizontalrichtung unter einem Brotteigbehälter (40) positioniert sind, wobei das Verfahren umfaßt das Einfüllen von Brotteig in den Brotteigbehälter und die Betätigung eines oder beider der beiden beweglichen Einrichtungen zu kontinuierlicher und reziproker Bewegung in im allgemeinen horizontaler Richtung, um den Abstand zwischen den beiden beweglichen Einrichtungen zu vergrößern bzw. zu verkleinern, während die oder jede der Rollen- und/oder Gurtförderer derselben kontinuierlich angetrieben werden, wodurch der Druck auf den zwischen den beiden beweglichen Einrichtungen befindlichen Brotteig daran gehindert wird, unangemessen erhöht zu werden, und es auf diese Weise zu ermöglichen, daß der Brotteig dazwischen stetig nach unten fließen kann.

2. Vorrichtung zum kontinuierlichen und mengenmäßigen Zuführen von Brotteig (3) oder dergleichen mit unter einem Brotteigbehälter (40) angeordneten Drückeinrichtungen, welche zwei bewegliche Einrichtungen umfassen, von denen eines zumindest ein Walzen- (21' - 24') oder ein Gurtförderer (55', 56') und der andere zumindest ein Gurtförderer (55, 56) ist, wobei der Walzenförderer derart angeordnet ist, daß er um seine eigene Achse rotiert, um eine Kraft zum Nachuntenziehen von Brotteig aufzubringen, und der Gurtförderer derart angeordnet ist, daß seine Förderfläche sich nach unten bewegt, um eine Kraft für das Nachuntenziehen des Brotteigs aufzubringen, wobei die zwei beweglichen Einrichtungen in einer im allgemeinen horizontalen Richtung einander gegenüberliegend angeordnet sind und eines oder beide der beiden beweglichen Einrichtungen derart angeordnet ist bzw. sind, daß eine kontinuierliche und reziproke Bewegung in im allgemeinen horizontaler Richtung zur Vergrößerung bzw. Verkleinerung des Abstands zwischen den beiden beweglichen Einrichtungen stattfindet, während die oder jede der beiden Walzen und/oder Gurtförderer derselben kontinuierlich angetrieben werden, um dadurch den Druck auf den zwischen den beiden beweglichen Einrichtungen positionierten Brotteig daran zu hindern, unangemessen anzuwachsen, derart, daß es dem Brotteig möglich ist, zwischen ihnen stetig nach unten zu fließen.

3. Vorrichtung nach Anspruch 2, bei welcher eine der beiden beweglichen Einrichtungen eine Mehrzahl von übereinander angeordneten Walzen (21' - 24') oder eine Mehrzahl von längsweise übereinander angeordneten Gurtförderern (55', 56') umfaßt und die andere aus einer Mehrzahl von längsweise übereinander angeordneten Gurtförderern (55, 56) besteht.

4. Vorrichtung nach einem der Ansprüche 2 oder 3, bei welcher die Umfangsgeschwindigkeit jeder Walze oder jeder der übereinander angeordneten Walzen (21' - 24') des einen der beiden beweglichen Einrichtungen in etwa die gleiche ist wie die Fördergeschwindigkeit jedes der Gurtförderer oder jedes der übereinander angeordneten Gurtförderer (55, 56) des anderen der beiden beweglichen Einrichtungen.

5. Vorrichtung nach Anspruch 3 oder 4, bei welcher die Umfangsgeschwindigkeit einer unteren Walze (24') der übereinander angeordneten Walzen größer ist als diejenige einer oberen Walze (21') derselben und die Fördergeschwindigkeit eines unteren Gurtförderers (56) der übereinander angeordneten Gurtförderer größer ist als die eines oberen Gurtförderers (55) desselben.

6. Vorrichtung nach einem der Ansprüche 3 bis 5, bei welcher die hin- und hergehenden Bewegungen einer oberen Walze oder eines oberen Gurtförderers und eines gegenüberliegenden oberen Gurtförderers zum Vergrößern und Verkleinern des Abstands zwischen ihnen im Wechsel mit der hin- und hergehenden Bewegung einer unteren Walze oder eines unteren Gurtförderers und eines gegenüberliegend angeordneten unteren Gurtförderers ausgeführt werden, um den Abstand dazwischen zu vergrößern und zu verkleinern.

7. Vorrichtung nach einem der Ansprüche 3 bis 5, bei welcher die Hin- und Herbewegungen einer oberen Walze oder eines oberen Gurtförderers und eines gegenüberliegenden oberen Gurtförderers wiederum auf die Hin- und Herbewegungen einer unteren Walze oder eines unteren Gurtförderers und eines gegenüberliegenden unteren Gurtförderers übertragen werden.

8. Vorrichtung nach einem der Ansprüche 2 bis 7, bei welcher der Abstand zwischen den beiden beweglichen Einrichtungen derart ist, daß der Abstand in der untersten Position geringer ist als derjenige in der obersten Position.

9. Vorrichtung nach einem der Ansprüche 2 bis 8, bei welcher die Hin- und Herbewegungen der Walze oder Walzen und des Gurtförderers bzw. der Gurtförderer ausgeführt werden dadurch, daß Schwingarme (10', 11'), auf welchen die Walze oder die Walzen oder der Gurtförderer oder die Gurtförderer drehbar oder beweglich angebracht sind, zu einem Schwingen um entsprechende Stützpunkte (10, 11) veranlaßt werden, die an den entsprechenden Stellen der Vorrichtung vorgesehen sind.

## Revendications

1. Procédé d'alimentation en continu et de façon quantitative en pâte à pain (3) ou analogue, à l'aide de moyens d'application de pression qui comprennent deux moyens mobiles, dont l'un est au moins un rouleau (21'-24') ou un transporteur à bande (55', 56') et dont l'autre est au moins un transporteur à bande (55, 56), lesquels deux moyens mobiles sont positionnés de façon opposée dans une direction horizontale, en dessous d'un récipient (40) à pâte à pain, le procédé comprenant la sortie de la pâte à pain dans ledit récipient de pâte à pain, et l'actionnement de l'un ou de l'ensemble desdits deux moyens mobiles pour qu'ils se déplacent en continu et en va-et-vient dans une direction globalement horizontale afin d'augmenter et de diminuer la distance entre lesdits deux moyens mobiles tandis que le ou chacun dudit rouleau et/ou dudit transporteur à bande de ceux-ci sont entraînés en continu, empêchant ainsi une augmentation excessive de la pression exercée sur ladite pâte à pain positionnée entre lesdits deux moyens mobiles, afin de permettre à ladite pâte à pain de descendre en s'écoulant de façon stable entre eux.

2. Appareil d'alimentation en continu et de façon quantitative en pâte à pain (3) ou analogue, comportant des moyens d'application de pression placés en dessous d'un récipient (40) pour pâte à pain, lesquels moyens d'application de pression comprennent deux moyens mobiles, dont l'un est au moins un rouleau (21'-24') ou un transporteur à bande (55', 56') et dont l'autre est au moins un transporteur à bande (55, 56), ledit rouleau étant agencé de façon à tourner autour de son propre axe afin d'appliquer une force pour tirer la pâte à pain vers le bas et ledit transporteur à bande étant agencé de façon que sa surface de transport se déplace vers le bas afin d'appliquer une force pour tirer la pâte à pain vers le bas, et lesquels deux moyens mobiles sont positionnés de façon opposée dans une direction globalement horizontale, l'un ou l'ensemble desdits deux moyens mobiles étant agencé de façon à se déplacer en continu et en va-et-vient dans une direction globalement horizontale afin d'augmenter et de diminuer la distance entres lesdits deux moyens mobiles tandis que le ou chacun dudit rouleau et/ou dudit transporteur à bande de ceux-ci sont entraînés en continu, afin d'empêcher une élévation excessive de la pression exercée sur la pâte à pain positionnée entre lesdits deux moyens mobiles afin de permettre à ladite pâte à pain de descendre en s'écoulant de façon stable entre eux.

3. Appareil selon la revendication 2, dans lequel l'un desdits deux moyens mobiles comprend plusieurs rouleaux (21'-24') formant une rangée ou plusieurs transporteurs à bande (55', 56') formant une rangée longitudinale, et l'autre comprend plusieurs transporteurs à bande (55, 56) formant une rangée longitudinale.

4. Appareil selon la revendication 2 ou 3, dans lequel la vitesse périphérique de chacun desdits rouleaux ou de chacun desdits rouleaux (21'-24') formant une rangée dudit premier desdits deux moyens mobiles est approximativement égale à la vitesse de transport de chacun desdits transporteurs à bande ou de chacun desdits transporteurs à bande (55, 56) formant une rangée, de l'autre desdits deux moyens mobiles.

5. Appareil selon la revendication 3 ou 4, dans lequel la vitesse périphérique d'un rouleau inférieur (24') desdits rouleaux formant une rangée est plus grande que celle d'un rouleau supérieur (21') de ceux-ci et la vitesse de transport d'un transporteur à bande inférieur (56) desdits transporteurs à bande formant une rangée est plus grande que celle d'un transporteur à bande supérieur (55) de ceux-ci.

6. Appareil selon l'une quelconque des revendications 3 à 5, dans lequel les mouvements alternatifs d'un rouleau supérieur ou d'un transporteur à bande supérieur et d'un transporteur à bande supérieur opposé pour augmenter et diminuer la distance entre eux sont exécutés en alternance avec les mouvements de va-et-vient d'un rouleau inférieur ou d'un transporteur à bande inférieur et d'un transporteur à bande inférieur opposé pour augmenter et diminuer la distance entre eux.

7. Appareil selon l'une quelconque des revendications 3 à 5, dans lequel les mouvements de va-et-vient d'un rouleau supérieur ou d'un transporteur à bande supérieur et d'un transporteur à bande supérieur opposés sont relayés tour à tour aux mouvements de va-et-vient d'un rouleau inférieur ou d'un transporteur à bande inférieur et d'un transporteur à bande inférieur opposé.

8. Appareil selon l'une quelconque des revendications 2 à 7, dans lequel la distance entre lesdits deux moyens mobiles est telle que la distance dans la position la plus basse est moindre que celle dans la position la plus haute.

9. Appareil selon l'une quelconque des revendications 2 à 8, dans lequel les mouvements de va-et-vient dudit rouleau ou desdits rouleaux et dudit transporteur à bande ou desdits transporteurs à bande sont exécutés en faisant osciller, autour de points respectifs de support (10, 11) prévus sur les emplacements respectifs de l'appareil, des bras oscillants (10', 11) sur lesquels ledit rouleau ou lesdits rouleaux ou ledit transporteur à bande ou lesdits transporteurs à bande sont montés de façon à pouvoir tourner ou se déplacer.
